# EUROPEAN PATENT APPLICATION

(11) **EP 0 603 000 A1**
(43) Date of publication of application: **22.06.1994**
(21) Application number: 93310238.6
(22) Date of filing: 17.12.1993
(51) Int. Cl.: H02K 11/00, H02K 5/14

(54) **Miniature motor**

(30) Priority: 18.12.1992 JP 87056/92
(71) Applicant: MABUCHI MOTOR KABUSHIKI KAISHA, Matsudo-shi, Chiba-ken (JP)
(72) Inventor: Mabuchi, Kazuichi, c/o Mabuchi Motor K.K., Inba-gun, Chiba-ken (JP); Sato, Makoto, c/o Mabuchi Motor Kabushiki Kaisha, Matsudo-shi, Chiba-ken (JP)
(74) Representative: Hitchcock, Esmond Antony

(57) **Abstract**

A miniature motor has a tubular case (31) closed at one end and a permanent magnet (32) fitted to the inner surface thereof. An end cover (33) closes the open end of the case. A rotor (34) with an armature (35) and a commutator (36) is connected to external power terminals (43) via internal terminals (41) and brushes (40) mounted on brush arms (5) fitted to the end cover (33). Each brush arm is substantially U-shaped with a brush (40) at the end of one limb. The internal terminal (41) is elastically deformed such that it is biased towards the other limb of the brush arm (5), and is located in the end cover (33) by an engaging groove.

## Description

This invention relates to a miniature electric motor of the type commonly used in audio and video equipment, and in automotive electrical components.

In a conventional miniature electric motor, electrical connections are made between the external power terminals and the commutator brushes using resilient strips of metal, fitted inside the motor case. Usually two such strips are required for each external power terminal. The first provides an internal terminal, for contact with one of the external power terminals and the second strip forms the brush arm, feeding current from the internal terminal to the commutator brush. The brush arm also exerts a force on the brush, pushing it against the commutator. Motors of this type are disclosed in, for example, GB 2222730, GB 2244865, EP 511776 and GB 1594334. We have found in conventional miniature motors that the force on the commutator brushes can be inconsistent, reducing the reliability of the electrical contact between the brushes and the commutator. Another problem, encountered during assembly is that the fitting of the internal terminals into the case is a difficult and time consuming process resulting in poor manufacturing efficiency. In some instances, insertion of the input terminals may shift the internal connectors within the case, after they have been fitted, reducing motor performance and the reliability of the contacts.

The present invention is directed at an electric motor construction that is easily assembled, and is resistant to vibration and impact. Such a motor comprises a tubular case closed at one end with a permanent magnet fitted to the inner surface thereof; an end cover closing the open end of the case; a rotor comprising an armature and a commutator; and brushes supported on the end cover for making sliding contact with the commutator, the brushes being mounted on brush arms for connection to external power terminals via internal terminals. According to the invention each brush arm is substantially U-shaped with a respective brush mounted at the end of one limb thereof, the other limb being disposed in the end cover proximate a respective internal terminal, each internal terminal being elastically deformed such that it is biased towards the other limb of a brush arm, and being located in the end cover by an engaging groove such that its movement perpendicular to a plane defined by the end cover is restricted. In preferred embodiments, a positive temperature coefficient resistor is disposed between an internal terminal and a respective brush arm for controlling the electric current fed to the armature.

Known motor constructions and some embodiments of the invention will now be described by way of example and with reference to the accompanying drawings wherein:
Figure 1 is a longitudinal partly sectional view of a conventional miniature motor;
Figure 2 is an end view of the end cover of the motor in Figure 1 showing the connectors used to supply power to the commutator brushes;
Figure 3 is an end view of an end cover showing connector arrangement incorporating a resistor;
Figure 4 is an end view of an end cover according to one embodiment of the invention;
Figure 5 is a partly section view of the end cover of Figure 4;
Figure 6 is an enlarged end view of an end cover showing an internal terminal prior to its installation within the end cover;
Figure 7 is a cross-section view of the end cover along line A-A of Figure 6;

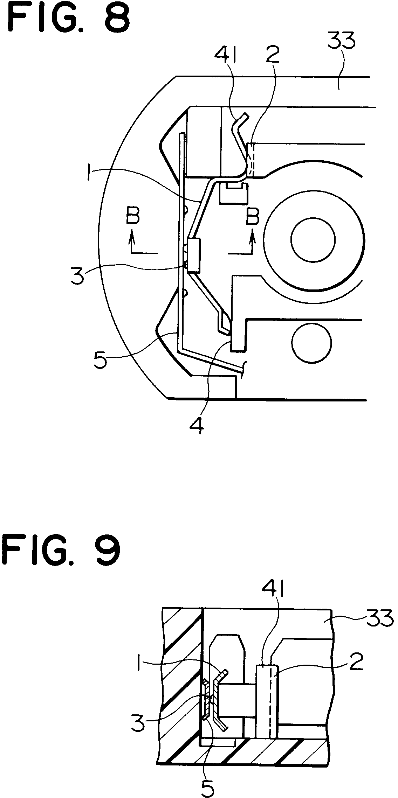

Figure 8 is an enlarged end view similar to Figure 6, but illustrating the internal terminal installed within the end cover;
Figure 9 is a cross-sectional view of the end cover on line B-B of Figure 8;
Figure 10 is an end view similar to Figure 4 showing another embodiment of the invention, incorporating a resistor; and
Figure 11 is a partly section view of the end cover of Figure 10.

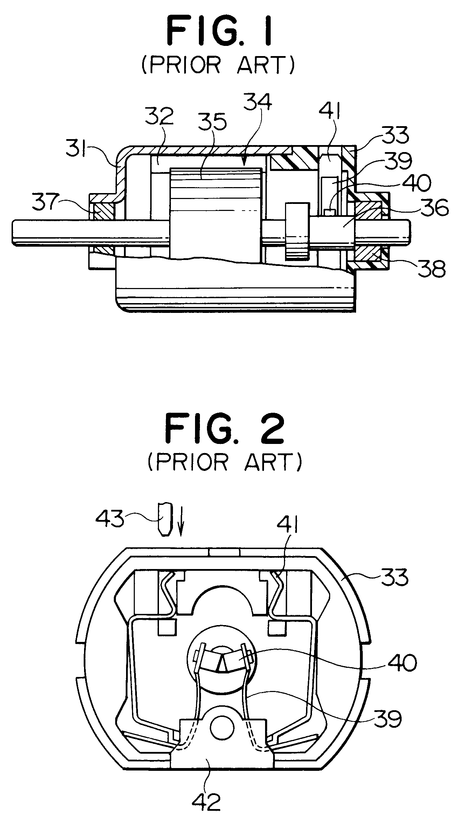

The motor shown in Figure 1 has a tubular case 31 closed at one end and made of a metallic material, such as mild steel. A permanent magnet 32 of tubular segment shape is fixedly fitted to the inner surface thereof. End cover 33 is made of a thermoplastic resin material and engages with an open end of the case 31. Rotor 34 consists of an armature 35 facing the permanent magnet 32 and a commutator 36, and is rotatably supported by bearings 37 and 38 each provided on the case 31 and the end cover 33.

Brush arm 39 is made of an electrically conductive material, formed into a strip shape, having a brush 40 on one end which makes sliding contact with the commutator 36. Also inside the end cover 33 is an internal terminal 41 in contact with the brush arm 39 so that power may be fed to the armature 35 from an external dc power source via the brush arms 39, brushes 40 and commutator 36.

Thus, as current is fed to the armature 35, the motor operates in a known manner to drive external equipment (not shown).

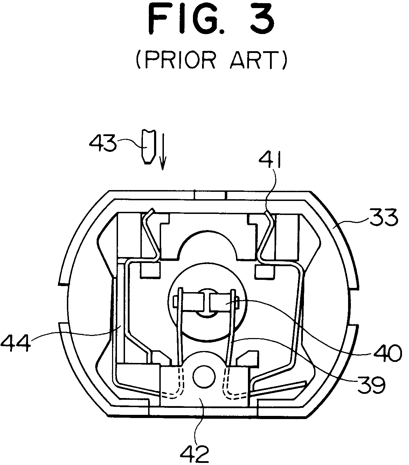

Figure 2 is an end view showing the end cover 33 in Figure 1. The brush arm 39 is substantially L-shaped, and fixedly fitted inside the end cover 33 by a holder 42 to force the brush 40 onto the commutator (not shown) by virtue of its resiliency. The internal terminal 41 is made of an electrically conductive strip of material, and fitted inside the case cover 33 with one end contacting the brush arm 39, the other end being substantially S-shaped and contacting the external power terminal 43 after insertion.

Figure 3 is an end view illustrating an alternative construction of case cover for the motor of Figure 1. In Figure 3, a positive temperature coefficient resistor 44 is held in position between the substantially U-shaped brush arm 39 and the internal terminal 41. The resistance of this device increases sharply if the temperature exceeds a certain level, 100°C for example. Consequently, if the temperature of the miniature motor is increased as a result of the continuous application of an overload or the flow of excessive current when the rotor is jammed, the resistance of the resistor rapidly increases, reducing the current fed to the miniature motor, and thus avoiding overheating and damage.

Conventional motors of the type shown in Figure 3 require a different internal terminal 41 and brush arm 39 configuration on one side, in order to accommodate the resistor 44. This increases the number of different components used in each motor and hence leads to an increase in the cost of manufacture.

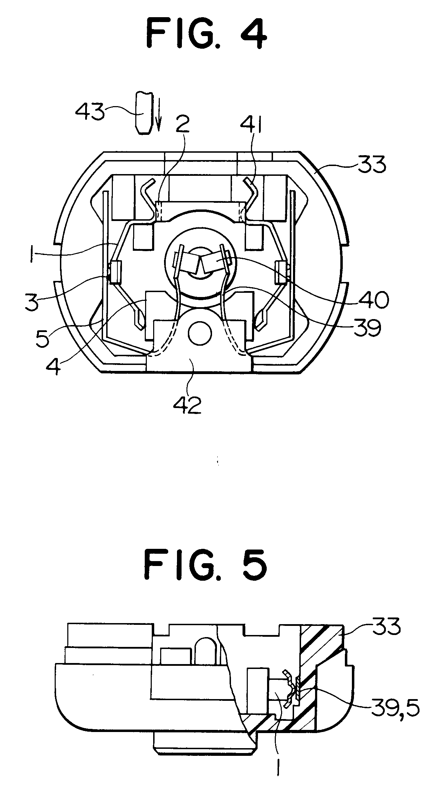

In the embodiment of the invention shown in Figures 4 and 5, the brush arm 39 is made of an electrically conductive material, such as copper or copper alloy, and substantially U-shaped, with a brush 40 fixedly fitted to the free end of one leg. The other leg is formed into substantially plate-shaped connecting part 5 extending along the inside face of the end cover 33, and fitted to the case cover 33 via a holder 42.

The internal terminal 41 is made of an electrically conductive material similar to that of the brush arm 39, and the part extending to the inside of the end cover 33 is formed into a substantially V-shaped connecting part 1. An engaging groove 2 is provided in the end cover 33 to receive and external power terminal 43. The width of the engaging groove 2 is slightly greater than the width of the internal terminal 41, and its depth is approximately equal to the thickness of the internal terminal 41. The movement of the internal terminal 41 is therefore restricted, particularly when inserting or extracting the external power terminal 43. as a result, the displacement of the internal terminal 41, as found in the prior art referred to above, may be prevented.

Projections 3, two are shown, are provided on the side of the connecting part 1 which comes into contact with the brush arm 39. In the aforementioned construction, the connecting part 1 of the internal terminal 41 is fitted between the engaging groove 2, an engaging part 4 provided on the end cover 33 and a connecting part 5 of the brush arm 39, in an elastically deformed state. As a result, the connecting part 1 pushes against the connecting part 5 of the brush arm 39 to maintain an electrical connection between the internal terminal 41 and the brush arm 39. The projection 3 on the connecting part 1 further improves the reliability of this contact.

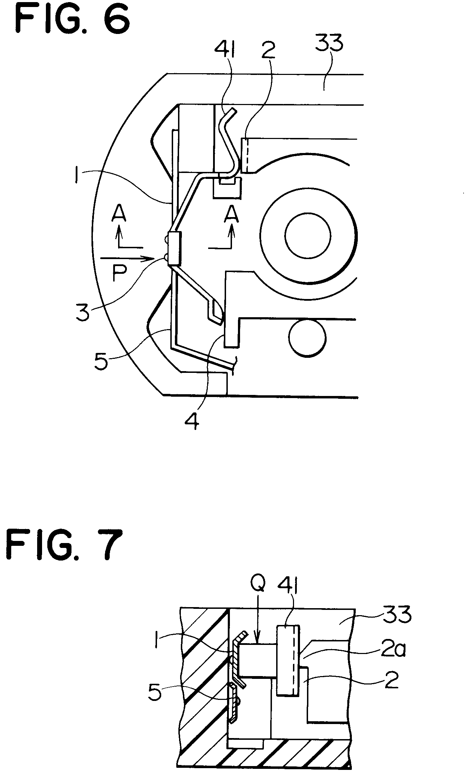

As shown in Figures 6 and 7, in order to fit the internal terminal 41 into position in the end cover 33, the V-shaped connecting part 1 is elastically deformed by applying a force in the direction indicated by arrow P, and then the internal terminal 41 may be inserted in the case cover 33 by applying a force in the direction indicated by arrow Q. The action of the force labelled P causes one end of the connecting part 1 to slide down the engaging part 4 whilst force Q moves the terminal end past the edge 2a of the engaging groove 2. The extend of the elastic deformation of the connecting part 1 may be determined appropriately, taking into consideration the pressure to be maintained between the connecting parts 1 and 5.

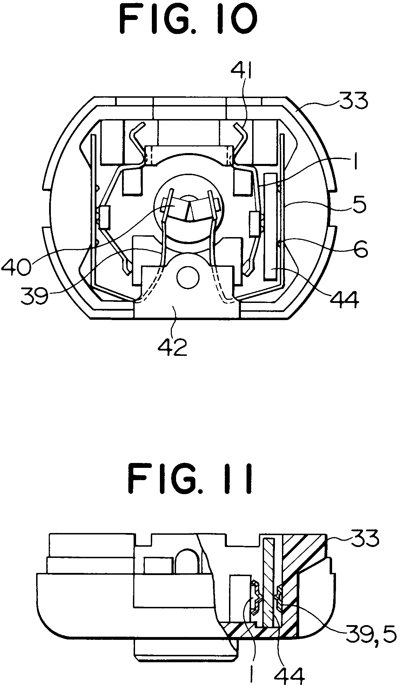

Figures 10 and 11 show an end cover according to another embodiment of this invention. A plate-shaped positive temperature coefficient resistor 44 is interposed between the connecting part 1 of the internal terminal 41 and the connecting part 5 of the brush arm 39.

Projections 6 are provided on the side of the connecting part 5 of the brush arm 39 where contact is made with the positive temperature coefficient resistor 44 in order to form a more reliable connection. It may be necessary to slightly alter the shape and size of the connecting part 1, relative to that of the equivalent component shown in Figures 4 and 5, to accomodate the resistor 44. This may easily be achieved, simply by changing part of the mold used to form the connecting part 1 as it is substantially the same in each case.

The present invention offers the following particular benefits:
(1) The elastic deformation of the connecting part whilst fitted within the end cover improves the reliability of the electrical connection between the internal terminal and the brush arm.
(2) The internal terminal may be fitted more easily and reliably by locating it in the engaging groove provided on the end cover, leading to improved productivity.
(3) The miniature motor may be manufactured, with or without a positive temperature coefficient resistor incorporated, using essentially the same set of components, thus reducing the cost of manufacture.

## Claims

1. A miniature motor having a tubular case (31) closed at one end with a permanent magnet (32) fitted to the inner surface thereof; an end cover (33) closing the open end of the case (31); a rotor (34) comprising an armature (35) and a commutator (36); and brushes (40) supported on the end cover (33) for making sliding contact with the commutator (36), the brushes being mounted on brush arms (39) for connection to external power terminals (43) via internal terminals (41)
CHARACTERISED IN THAT
each brush arm (39) is substantially U-shaped with a respective brush (40) mounted at the end of one limb thereof, the other limb (5) being disposed in the end cover (33) proximate a respective internal terminal (1), each internal terminal being elastically deformed such that it is biased towards said other limb (5) of a brush arm (39), and being located in the end cover (33) by an engaging groove (2) such that its movement perpendicular to a plane defined by the end cover is restricted.

2. A miniature motor according to Claim 1 wherein a positive temperature coefficient resistor (44) is disposed between an internal terminal (1) and a respective brush arm (39) for controlling the electric current fed to the armature.

3. A miniature motor according to Claim 1 or Claim 2 wherein the internal terminal (1) comprises a substantially V-shaped connecting part biased towards the other limb (5) of the respective brush arm (39).

4. A miniature motor according to any preceding Claim wherein each internal terminal (1) has a projection (3) directed toward the other limb (5) of the respective brush arm (39).

5. A miniature motor according to any preceding claim wherein each brush arm (39) has a projection (6) directed towards the respective internal terminal (1).
